# EUROPÄISCHE PATENTSCHRIFT

(11) **EP 2 714 434 B1**
(45) Veröffentlichungstag und Bekanntmachung des Hinweises auf die Patenterteilung: **06.09.2017**
(21) Anmeldenummer: 12717298.9
(22) Anmeldetag: 27.04.2012
(51) Int. Cl.: B60C 11/13, B60C 11/04

(54) **LAUFSTREIFENPROFIL EINES FAHRZEUGLUFTREIFENS FÜR NUTZFAHRZEUGE**
TREAD PROFILE OF A VEHICLE PNEUMATIC TYRE FOR UTILITY VEHICLES
SCULPTURE DE BANDE DE ROULEMENT D'UN PNEU DE VÉHICULE POUR VÉHICULES UTILITAIRES

(30) Priorität: 30.05.2011 DE 102011050712
(43) Veröffentlichungstag der Anmeldung: 09.04.2014
(73) Patentinhaber: Continental Reifen Deutschland GmbH, 30165 Hannover (DE)
(72) Erfinder: FRIES, Volkmar, 31707 Bad Eilsen (DE); LEHN, Michael, 29221 Celle (DE); REDIGER, Alexander, 30163 Hannover (DE)
(74) Vertreter: Finger, Karsten
(86) Internationale Anmeldenummer: PCT/EP2012/057721
(87) Internationale Veröffentlichungsnummer: WO 2012/163607

(56) Entgegenhaltungen:
- JP-A- 2000 177 323
- US-A- 5 345 988
- US-A- 5 445 201
- US-A1- 2004 060 628

## Beschreibung

Die Erfindung betrifft ein Laufstreifenprofil eines Fahrzeugluftreifens für Nutzfahrzeuge mit einem in axialer Richtung A des Reifens mittleren Laufstreifenprofilabschnitt und mit axial beiderseits des mittleren Laufstreifenprofilabschnittes jeweils einem Schulterprofilabschnitt, wobei der mittlere Laufstreifenprofilabschnitt aus mehreren axial nebeneinander angeordneten, durch jeweils eine Umfangsrille voneinander getrennten und in Umfangsrichtung U ausgerichteten Profilbändern - wie beispielsweise Umfangsrippen oder Profilblockreihen - ausgebildet ist, von denen das axial zu beiden Seiten hin jeweils äußere Profilband jeweils ein erstes Profilband ist, wobei die Schulterprofilabschnitte jeweils ein zweites Profilband aufweisen, welches von dem nächstliegenden ersten Profilband des mittleren Laufstreifenabschnitts jeweils durch eine erste Umfangsrille getrennt ist, wobei diese Profilbänder nach radial außen jeweils durch eine radial äußere, die Bodenkontaktoberfläche bildende Oberfläche und zur angrenzenden Umfangsrille mit einer Flanke, welche die zum Profilband gerichtete Rillenwand bildet, begrenzt sind, wobei wenigstens eine der beiden ersten Umfangsrillen mit einem aus ihrem Rillengrund radial erhabenen Steg ausgebildet ist, welcher sich über den gesamten Umfang des Fahrzeugluftreifens erstreckt und in radialer Erstreckungsrichtung radial innerhalb der durch die radial äußeren Oberflächen der ersten und der zweiten Profilbänder gebildeten Mantelfläche endet und welcher die erste Umfangsrille in axialer Richtung A in einen ersten, an das erste Profilband angrenzenden und in einen zweiten, an das zweite Profilband angrenzenden Umfangsrillenabschnitt teilt.

Derartige Fahrzeugluftreifen sind bekannt. Beispielsweise sind derartige Nutzfahrzeugreifen mit Umfangsrippen, welche durch Umfangsillen getrennt sind, bekannt. Bei derartigen Nutzfahrzeugreifen besteht die Möglichkeit einer Rissbildung im Bereich des Rillengrundes, den mit verschiedenen Maßnahmen die Reifenkonstruktion entgegengewirkt wird. Bei einigen besonders anspruchsvollen Reifendimensionen, die im Betrieb besonders hohen Belastungen ausgesetzt sind, ist jedoch dennoch im Übergangsbereich zwischen Schulterrippen und der angrenzenden Rippe des zentralen Laufstreifenabschnitts aufgrund der hohen einwirkenden Belastungen die Entstehung von Rissen im Rillengrund möglich. Es wurde bereits zur Reduzierung der Rissbildung gelegentlich vorgeschlagen im Rillengrund der diese beiden Rippen voneinander trennenden Umfangsrille einen diese Umfangsrille in axialer Richtung A des Reifens in zwei Umfangsrillenabschnitte aufteilenden Steg auszubilden, welcher sich über den gesamten Umfang erstreckt und welcher in radialer Richtung R des Reifens nicht bis zur Mantelfläche des Reifens reicht. Dennoch ist in besonderen Einsatzfällen bei derartigen Reifen im Rillengrund dieser mit Hilfe des Steges geteilten Umfangsrille noch Rissbildung möglich.

Aus der US 2004/0060628 A1 ist ein Laufstreifenprofil eines Fahrzeugluftreifens gemäß den Merkmalen des Oberbegriffs des Anspruchs 1 bekannt. Aus der US 5,445,201 ist ebenfalls ein Laufstreifenprofil eines Fahrzeugluftreifens bekannt, in welchem die Umfangsrille durch einen Steg in zwei Umfangsrillenabschnitte unterteilt wird.

Der Erfindung liegt daher die Aufgabe zugrunde bei derartigen Fahrzeugluftreifen, mit einfachen Mitteln die Möglichkeit der Entstehung von Rissbildung im Rillengrund weiter zu reduzieren.

Die Aufgabe wird erfindungsgemäß durch die Ausbildung eines Laufstreifenprofils eines Fahrzeugluftreifens für Nutzfahrzeuge mit einem in axialer Richtung A des Reifens mittleren Laufstreifenprofilabschnitt und mit axial beiderseits des mittleren Laufstreifenprofilabschnittes jeweils einem Schulterprofilabschnitt, wobei der mittlere Laufstreifenprofilabschnitt aus mehreren axial nebeneinander angeordneten, durch jeweils eine Umfangsrille voneinander getrennten und in Umfangsrichtung U ausgerichteten Profilbändern - wie beispielsweise Umfangsrippen oder Profilblockreihen - ausgebildet ist, von denen das axial zu beiden Seiten hin jeweils äußere Profilband jeweils ein erstes Profilband ist, wobei die Schulterprofilabschnitte jeweils ein zweites Profilband aufweisen, welches von dem nächstliegenden ersten Profilband des mittleren Laufstreifenabschnitts jeweils durch eine erste Umfangsrille getrennt ist, wobei diese Profilbänder nach radial außen jeweils durch eine radial äußere, die Bodenkontaktoberfläche bildende Oberfläche und zur angrenzenden Umfangsrille mit einer Flanke, welche die zum Profilband gerichtete Rillenwand bildet, begrenzt sind, wobei wenigstens eine der beiden ersten Umfangsrillen mit einem aus ihrem Rillengrund radial erhabenen Steg ausgebildet ist, welcher sich über den gesamten Umfang des Fahrzeugluftreifens erstreckt und in radialer Erstreckungsrichtung radial innerhalb der durch die radial äußeren Oberflächen der ersten und der zweiten Profilbänder gebildeten Mantelfläche endet und welcher die erste Umfangsrille in axialer Richtung A in einen ersten, an das erste Profilband angrenzenden und in einen zweiten, an das zweite Profilband angrenzenden Umfangsrillenabschnitt teilt, gemäß den Merkmalen von Anspruch 1 gelöst, bei dem der erste Umfangsrillenabschnitt schmaler ausgebildet ist als der zweite, bei dem in den die Reifenachse aufweisenden Querschnittebenen der den zweiten Umfangsrillenabschnitt nach radial innen begrenzende Rillengrund mit einem geradlinig verlaufenden axialen Erstreckungsabschnitt der Länge a ausgebildet ist, bei dem in den die Reifenachse aufweisenden Querschnittebenen die zum zweiten Umfangsrillenabschnitt weisende Flanke des Steges sich im wesentlichen geradlinig nach außen erstreckt, wobei zwischen geradlinigem Erstreckungsabschnitt des Rillengrundes und Stegflanke ein gekrümmter Übergangsabschnitt ausgebildet ist mit einem Krümmungsradius R₂, und bei dem in den die Reifenachse aufweisenden Querschnittebenen die zum zweiten Umfangsrillenabschnitt weisende Flanke des zweiten Profilbandes sich zumindest in ihrem radial äußeren Erstreckungsbereich im wesentlichen geradlinig nach radial außen erstreckt, wobei ausgehend vom geradlinigen Erstreckungsabschnitt des Rillengrundes zur Flanke des zweiten Profilbandes hin ein gekrümmter Übergang ausgebildet ist mit einem Krümmungsradius R₃ mit R₃ > R₂, wobei der geradlinige Erstreckungsabschnitt des Rillengrundes in axialer Richtung A ausgehend vom Übergang zur Stegflanke bis zum Übergang zur Flanke des zweiten Profilbandes unter Einschluss eines Neigungswinkels **α mit 3° ≤ α ≤ 20°** zur axialen Richtung A radial ansteigend ausgebildet ist.

Die asymmetrische Aufteilung dieser mit Steg ausgebildeten Umfangsrille mit ihrem breiteren Umfangsrillenabschnitt zur Schulter hin bewirkt bereits eine Verbesserung des Rissbildungsverhaltens in diesem für Rissbildung in Umfangsrillen kritischen Bereich im Reifen. Die Ausbildung mit einer Querschnittkontur mit geradlinigem, zur Schulter hin ansteigend geneigtem Rillengrund und mit einem gekrümmten Übergang zum Steg hin mit Rillenradius R₂ und mit einem gekrümmten Übergang zum schulterseitigen zweiten Profilband hin mit Krümmungsradius R₃, welcher größer ist als der Radius R₂, bewirkt eine gezielte Materialverlagerung und Versteifung des für Rissbildung kritischen zur Schulter hin weisenden Übergangsbereichs von Rillengrund zum zweiten Profilband hin. Durch diese Ausbildung wird eine bessere Zugkraftverteilung in den kritischen Bereichen bewirkt, welche der Entstehung von Rissen weiter entgegenwirkt. Durch diese Ausbildung wird somit eine erhöhte Sicherheit gegen Rissbildung des Rillengrundes bei derartigen Reifen ermöglicht.

Besonders vorteilhaft ist die Ausbildung eines Laufstreifenprofils eines Fahrzeugluftreifens gemäß den Merkmalen von Anspruch 2, wobei in den die Reifenachse aufweisenden Querschnittebenen der Rillengrund des ersten Umfangsrillenabschnittes mit einem Krümmungsradius R₁ mit R₁ < R₃ gekrümmt ausgebildet ist, der auf der zum Steg hinweisenden Seite tangential in die den ersten Umfangsrillenabschnitt begrenzende Stegflanke und auf der zum ersten Profilband weisenden Seite tangential in die die erste Umfangsrille begrenzende Flanke des ersten Profilbandes übergeht.

Besonders vorteilhaft ist die Ausbildung eines Laufstreifenprofils eines Fahrzeugluftreifens gemäß den Merkmalen von Anspruch 3, wobei die Krümmungsradien R₁ und R₂ mit (0,5 R₁)≤ R₂ ≤ (1,5 R₁) ausgebildet sind.

Besonders vorteilhaft ist die Ausbildung eines Laufstreifenprofils eines Fahrzeugluftreifens gemäß den Merkmalen von Anspruch 4, wobei die erste Umfangsrille in ihrem ersten Umfangsrillenabschnitt mit einer Rillentiefe t₁ und in ihrem zweiten Umfangsrillenabschnitt mit einer Rillentiefe t₂ ausgebildet ist mit (1,2 t₁) ≥ t₂ ≥ (0,8 t₁).

Besonders vorteilhaft ist die Ausbildung eines Laufstreifenprofils eines Fahrzeugluftreifens gemäß den Merkmalen von Anspruch 5, wobei die erste Umfangsrille in ihrem zweiten Umfangsrillenabschnitt mit einer Rillentiefe t₂ und im Erstreckungsbereich der den Steg nach radial außen begrenzenden Oberfläche mit einer Rillentiefe t₃ ausgebildet ist mit (0,5 t₂)≥t₃≥(0,1 t₂).

Besonders vorteilhaft ist die Ausbildung eines Laufstreifenprofils eines Fahrzeugluftreifens gemäß den Merkmalen von Anspruch 6, wobei der axiale Abstand zwischen dem Schnitt S₄ der Flanke des zweiten Profilbandes mit der radial äußeren Oberfläche des zweiten Profilbandes zum Schnitt S₃ der den zweiten Umfangsrillenabschnitt begrenzenden Stegflanke mit der den Steg nach radial außen begrenzenden Oberfläche die Breite b₂ des zweiten Umfangsrillenabschnitts bildet, wobei der axiale Abstand zwischen dem Schnitt S₁ der Flanke des ersten Profilbandes mit der radial äußeren Oberfläche des ersten Profilbandes zum Schnitt S₂ der den ersten Umfangsrillenabschnitt begrenzenden Stegflanke mit der den Steg nach radial außen begrenzenden Oberfläche die Breite b₁ des ersten Umfangsrillenabschnitts bildet und wobei die Breiten b₂ und b₁ mit (2b₁)≤b₂≤(4b₁) ausgebildet sind.

Besonders vorteilhaft ist die Ausbildung eines Laufstreifenprofils eines Fahrzeugluftreifens gemäß den Merkmalen von Anspruch 7, wobei der axiale Abstand zwischen dem Schnitt S₄ der Flanke des zweiten Profilbandes mit der radial äußeren Oberfläche des zweiten Profilbandes zum Schnitt S₁ der Flanke des ersten Profilbandes mit der radial äußeren Oberfläche des ersten Profilbandes die Breite B der ersten Umfangrille bildet, wobei der axiale Abstand zwischen dem Schnitt S₃ der den zweiten Umfangsrillenabschnitt begrenzenden Stegflanke mit der den Steg nach radial außen begrenzenden Oberfläche zum Schnitt S₂ der den ersten Umfangsrillenabschnitt begrenzenden Stegflanke mit der den Steg nach radial außen begrenzenden Oberfläche die Breite b₃ des Steges bildet mit (0,3B) ≤ b₃≤(0,6B).

Besonders vorteilhaft ist die Ausbildung eines Laufstreifenprofils eines Fahrzeugluftreifens gemäß den Merkmalen von Anspruch **8,** wobei im Steg im Übergang zwischen der den Steg nach radial außen begrenzenden Oberfläche und der zum zweiten Umfangsrillenabschnitt weisenden Stegflanke eine Fase ausgebildet ist. Hierdurch kann zusätzlich dem Fangen von Steinen in der Rille und dem hierdurch unkontrollierten Steinauswurf entgegengewirkt werden.

Besonders vorteilhaft ist die Ausbildung eines Laufstreifenprofils eines Fahrzeugluftreifens gemäß den Merkmalen von Anspruch **9,** wobei das erste Profilband und das zweite Profilband jeweils eine Umfangsrippe ist.

Die Erfindung wird im Folgenden an Hand der in den Figuren 1 bis 3 dargestellten Ausführungsbeispiele näher erläutert. Hierin zeigen
- Fig.1: die Querschnittsdarstellung eines Fahrzeugluftreifens für Nutzfahrzeuge radialer Bauart,
- Fig.2: vergrößerte Querschnittsdarstellung des Details II des Laufstreifenprofils von Fig.1,
- Fig.3: vergrößerte Querschnittsdarstellung des Details II des Laufstreifenprofils von Fig.1 in alternativer Ausführung.

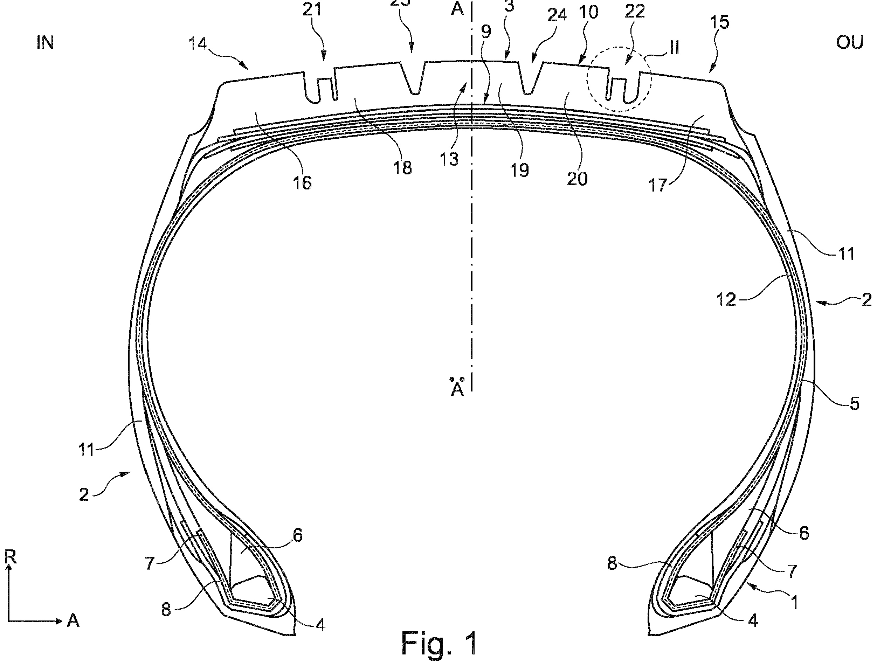

Fig.1 zeigt einen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Die Seitenwände sind an ihrem in radialer Richtung nach innen weisenden Erstreckungsende jeweils mit einem Wulstbereich 1 ausgebildet in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung entlang des radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 6. Die Karkasse ist in bekannter nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher in bekannter Weise beispielsweise aus vier in radialer Richtung R übereinander und aufeinanderliegend angeordneten Gürtellagen ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Das Laufstreifenprofil 10 ist, wie in Fig. 1 dargestellt ist, aus einem mittleren Laufstreifenabschnitt 13 mit den in axialer Richtung A nebeneinander angeordneten Umfangsrippen 18, 19 und 20 und aus den beiden jeweils axial außerhalb des mittleren Laufstreifenabschnitts 13 ausgebildeten Schulterabschnitten 14 und 15 ausgebildet. Der Schulterabschnitt 14 bildet im montierten Zustand am Fahrzeug den zur Fahrzeuginnenseite IN hinweisenden Schulterabschnitt. Der Schulterabschnitt 15 bildet im montierten Zustand am Fahrzeug den zur Fahrzeugaußenseite OU hinweisenden Schulterabschnitt. Der Schulterabschnitt 13 ist mit einer Umfangsrippe 16 ausgebildet. Der Schulterabschnitt 15 ist mit einer Umfangsrippe 17 ausgebildet. Die Umfangsrippen 16, 17,18, 19 und 20 sind jeweils über den gesamten Umfang des Fahrzeugluftreifens erstreckt und in Umfangsrichtung U des Fahrzeugluftreifens ausgerichtet. Die Umfangsrippen 18 und 19 sind in axialer Richtung A des Fahrzeugluftreifens durch eine über den gesamten Umfang des Fahrzeugluftreifens erstreckte und in Umfangsrichtung U ausgerichtete Umfangsrille 23 voneinander beabstandet. Die Umfangsrippe 19 und die Umfangsrippe 20 sind in axialer Richtung A des Fahrzeugluftreifens durch eine über den gesamten Umfang des Fahrzeugluftreifens erstreckte und in Umfangsrichtung U ausgerichtete Umfangsrille 24 voneinander beabstandet. Die Umfangsrippe 18 des mittleren Laufstreifenabschnitts 13 und die Umfangsrippe 16 des Schulterbereiches 14 sind in axialer Richtung A durch eine Umfangsrille 21, welche sich über den gesamten Umfang des Fahrzeugluftreifens erstreckt und in Umfangsrichtung U ausgerichtet ist, voneinander beabstandet. Die Umfangsrippe 20 des mittleren Laufstreifenabschnitts 13 und die Umfangsrippe 17 des Schulterabschnitts 15 sind in axialer Richtung A des Fahrzeugluftreifens durch eine in Umfangsrichtung U des Fahrzeugluftreifens ausgerichtete und über den gesamten Umfang des Fahrzeugluftreifens erstreckte Umfangsrille 22 voneinander beabstandet. Die Umfangsrillen 21 und 22 sind an der Äquatorebene Ä-Ä des Fahrzeugluftreifens gespiegelt zueinander ausgebildet.

Im Folgenden wird daher zur Erläuterung der Ausbildung dieser beiden Umfangsrillen 21 und 22 lediglich die Umfangsrille 22 weiter erläutert.

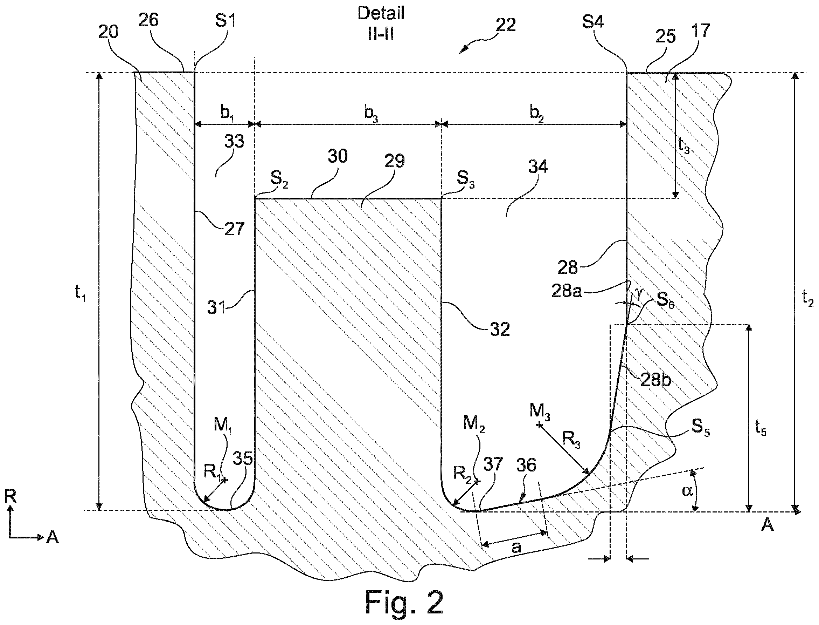

Wie in Fig. 2 zu erkennen ist, ist die Umfangsrippe 20 in radialer Richtung R nach außen mit einer radial äußeren Oberfläche 26 und die Umfangsrippe 17 in radialer Richtung R nach außen mit einer radial äußeren Oberfläche 25 begrenzt, wobei die Oberflächen 26 und 25 jeweils die Straßenkontaktoberfläche bilden und Teil der Mantelfläche des Laufstreifenprofiles sind.

Im Rillengrund der Umfangsrille 22 ist ein Steg 29 ausgebildet, welcher sich über den gesamten Umfang des Fahrzeugluftreifens erstreckt und in Umfangsrichtung U ausgerichtet ist und welcher die Umfangsrille 22 in einen ersten axial zur Umfangsrippe 20 hinweisenden Umfangsrillenabschnitt 33 und in einen zweiten axial zur Umfangsrippe 17 hinweisenden Umfangsrillenabschnitt 34 teilt. Der Steg 29 ist in nach radial außen hin mit einer radial äußeren Oberfläche 30 begrenzt, welche in den Schnittebenen, die die Reifenachse beinhalten, im Wesentlichen geradlinig ausgebildet ist. Der Steg 29 ist zum Umfangsrillenabschnitt 33 hin mit einer Stegflanke 31 und zum Umfangsrillenabschnitt 34 hin mit einer Stegflanke 32 begrenzt, die sich in den die Reifenachse beinhaltenden Querschnittebenen im Wesentlichen in radialer Richtung R geradlinig verlaufend erstrecken. In den die Reifenachse beinhaltenden Querschnittebenen schneidet die Stegflanke 31 die radial äußere Oberfläche 30 im Schnittpunkt S₂ und die Stegflanke 32 die radial äußere Oberfläche 30 im Schnittpunkt S₃. Der Umfangsrillenabschnitt 33 ist nach radial innen von einem Rillengrund 35, der Umfangsrillenabschnitt 34 ist nach radial innen von einem Rillengrund 36 begrenzt.

Der Umfangsrillenabschnitt 33 ist zur Umfangsrippe 20 hin von der zur Umfangsrille 22 hinweisenden Flanke 27 der Umfangsrippe 20 begrenzt, welche sich aus dem Rillengrund 35 des Umfangsrillenabschnitts 33 nach radial außen hin erstreckt und in den die Reifenachse beinhaltenden Querschnittebenen die radial äußere Oberfläche 26 im Schnittpunkt S₁ schneidet. Die Stegflanke 31 erstreckt sich ebenfalls ausgehend vom Rillengrund 35 nach radial außen.

Der Rillengrund 35 ist in den die Reifenachse aufweisenden Querschnittebenen mit einem Krümmungsradius R₁ nach radial außen hin gekrümmt verlaufend ausgebildet, wobei der Krümmungsmittelpunkt M₁ oberhalb des tiefsten Punktes des Umfangsrillenabschnittes 33 ausgebildet ist. Der Rillengrund 35 geht mit seiner Krümmung tangential in die Flanke 27 und auf der anderen Seite tangential in die Stegflanke 31 über.

Der Rillengrund 36 ist mit einem in den Querschnittebenen, welche die Reifenachse beinhalten, geradlinig verlaufenden axialen Erstreckungsabschnitt der Länge a ausgebildet, welcher in den die Reifenachse beinhaltenden Querschnittebenen in axialer Richtung A vom Steg 29 ausgehend in Richtung Umfangsrippe 17 unter einem Neigungswinkel α zur axialen Richtung A unter zunehmender radialer Position konstant ansteigt. Zwischen dem geradlinigen Erstreckungsbereich 37 und der Stegflanke 32 ist ein in den die Reifenachse beinhaltenden Querschnittebenen gekrümmter Übergangskonturverlauf mit Krümmungsradius R₂ ausgebildet, welcher tangential in den geradlinigen Abschnitt 37 und tangential in den Konturverlauf der Stegflanke 32 übergeht. Der Krümmungsmittelpunkt M₂ des Krümmungsradius R₂ ist radial außerhalb des tiefsten Punktes des Rillengrundes 37 des Umfangrillenabschnittes 34 ausgebildet. Der Übergang zwischen geradlinigem Erstreckungsabschnitt 37 des Rillengrundes 36 und der Flanke 28 der Rippe 17 ist ebenfalls in den die Reifenachse beinhaltenden Querschnittebenen mit einem Krümmungsradius R₃ gekrümmt verlaufend ausgebildet, wobei der Krümmungsmittelpunkt M₃ radial außerhalb des Rillengrundes 36 des Umfangsrillenabschnittes 34 ausgebildet ist und tangential sowohl in den geradlinigen Erstreckungsabschnitt 37 und in einen geradlinigen Erstreckungsabschnitt der Flanke 28 der Umfangsrippe 17 übergeht.

Die Krümmungsradien R₁, R₂ und R₃ sind mit R₃ > R₂ und mit R₁ < R₃ ausgebildet. Die Krümmungsradien R₁ und R₂ sind mit (0,5 R₁ ≤ R₂ ≤ 1,5 R₁) ausgebildet.

Der radialen Abstand zwischen der radial äußeren Oberfläche 26 im Schnittpunkt S₁ zum tiefsten Punkt des Rillengrundes 35 des Umfangsrillenabschnittes 33 ist als Tiefe t₁ bezeichnet. Der radialen Abstand zwischen der radial äußeren Oberfläche 25 im Schnittpunkt S₄ zum tiefsten Punkt des Rillengrundes 36 des Umfangsrillenabschnittes 34 ist als Tiefe t₂ bezeichnet. Der radiale Abstand der den Steg 29 begrenzenden Oberfläche 30, zu der die radial äußere Oberflächen 26 und 25 gebildeten Manteloberfläche ist mit der Höhe t₃ dargestellt, wobei die Höhe t₃ als radialer Abstand zwischen der geradlinigen Verbindung der Schnittpunkte S₁ und S₄ zur geradlinigen Verbindung der Schnittpunkte S₂ und S₃ gemessen wird. Die Tiefen t₁ und t₂ sowie die Höhe t₃ sind dabei mit (1,2 t₁) ≥ t₂ ≥ (0,8 t₁) und mit (0,5 t₂)≥t₃≥(0,1 t₂) ausgebildet.

In dem in Figur 2 dargestellten Ausführungsbeispiel ist t₂ = t₃ gewählt.

Die Breite b₁ des ersten Umfangserstreckungsabschnitts 33 bemisst sich als der in axialer Richtung A des Reifens gemessene Abstand zwischen dem Schnittpunkt S₁ und S₂. Die Breite b₂ des zweiten Umfangserstreckungsabschnitts 34 bemisst sich als der in axialer Richtung A des Reifens gemessene Abstand zwischen dem Schnittpunkt S₃ und dem Schnittpunkt S₄. Die Breite b₃ des Steges 29 bemisst sich als der in axialer Richtung A des Reifens gemessene Abstand zwischen dem Schnittpunktes S₂ und dem Schnittpunkt S₃. Die Breite B der Umfangsrille 22 bemisst sich als der in axialer Richtung A des Reifens gemessene Abstand zwischen dem Schnittpunkt S₁ und dem Schnittpunkt S₄. Die Breiten b₁, b₂, b₃ und B sind dabei so bemessen, dass (2 b₁) ≤ b₂≤(4 b₁) und (0,3B) ≤ b₃≤(0,6B). Beispielsweise ist b₃ = 0,4 B ausgebildet.

Der Neigungswinkel α ist mit 3° ≤ α ≤ 20° ausgebildet. Im dargestellten Ausführungsbeispiel ist α = 10° ausgebildet.

Die Erstreckungslänge a ist mit 0,7mm ≤ a ≤ 3,0mm ausgebildet. Beispielsweise ist
a = 2mm ausgebildet.

Der Radius R₂ ist mit 0,52mm ≤ R₂ ≤ 2mm ausgebildet. Beispielsweise ist R₂ = 1mm ausgebildet. Der Radius R₃ ist mit 2mm ≤ R₃ ≤ 5mm ausgebildet. Beispielsweise ist R₃ = 3mm gewählt.

In Fig. 2 ist ein weiteres Ausführungsbeispiel dargestellt, bei dem die Flanke 28 der Umfangsrippe 17 in ihrem radial äußeren Erstreckungsbereich als in radialer Richtung erstreckter Erstreckungsabschnitt 28a und in ihrem radial inneren Erstreckungsbereich als geradliniger Erstreckungsabschnitt 28b ausgebildet sind. Die Erstreckungsabschnitte 28a und 28b schneiden sich in einem radialen Abstand t₅ vom tiefsten Punkt des Rillengrundes 36 des Umfangsrillenabschnittes 34 radial außerhalb des tiefsten Punktes in einem Schnittpunkt S₆ unter Einschluss eines Schnittwinkels γ mit γ≤5°, beispielsweise mit γ= 2°. Der Schnittpunkt S₆ bildet dabei eine Knickstelle des in den die Reifenachse aufweisenden Querschnittebenen gebildeten Verlaufes der Flanke 28. Der radiale Abstand t₅ ist dabei mit 0,5 t₂ ≥ t₅ ≥ 0,25 t₂ ausgebildet.

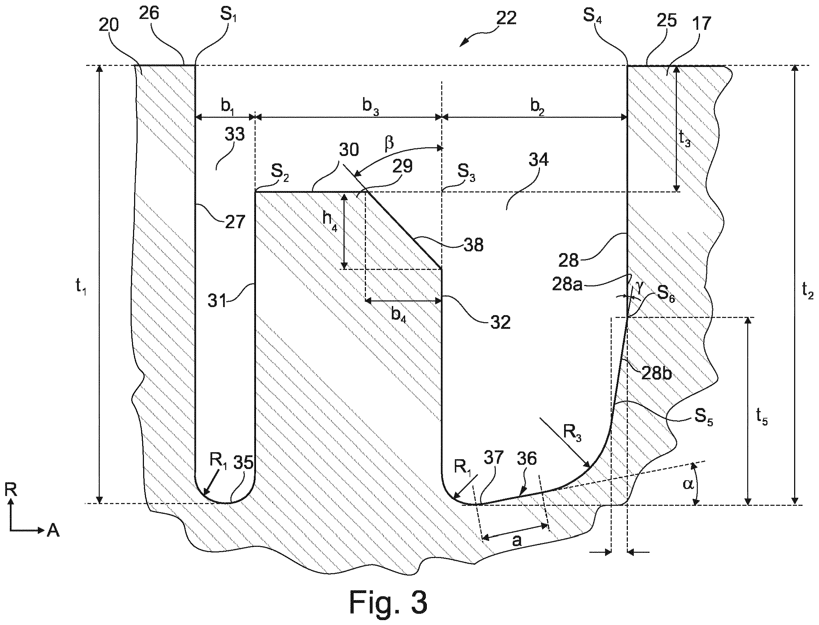

Fig. 3 zeigt eine alternative Ausbildung des Steges 29, bei dem der Steg 29 auf der zum zweiten Umfangsrillenabschnitt 34 gerichteten Seite im Übergang zwischen radial äußerer Oberfläche 30 und Stegflanke 32 mit einer Fase 38 ausgebildet ist. In den die Reifenachse aufweisenden Querschnittebenen ist die Fase 38 unter Einschluss eines Winkels β zur radialen Richtung R des Fahrzeugluftreifens geneigt ausgebildet mit 30° ≤ β ≤ 60°. Im dargestellten Ausführungsbeispiel ist β = 45° gewählt.
Die Fase 38 schneidet die radiale äußere Oberfläche im axialen Abstand b₄
von dem durch Verlängerung der radial äußeren Oberfläche 30 zum Umfangsrillenabschnitt 34 hin und dem durch Verlängerung der Stegflanke 32 nach radial außen hin gebildeten Schnittpunkt S₃. Die Fase 38 schneidet die Stegflanke 32 in dem in radialer Richtung R des Reifens gemessenen Abstand h₄ vom Schnittpunkt S₃. Die Bemessungen der Stegbreite b₃ sowie des radialen Abstandes t₃ erfolgen wie im Zusammenhang mit Fig. 2 beschrieben.

Die Erstreckungsbreite b₄ ist mit b₄ ≤ (0,5 b₃) ausgebildet. Beispielsweise ist b₄ = (1/3)b₃.

In Figur 2 ist beispielhaft ein Nutzfahrzeugreifen mit einem mittleren Abschnitt 13 mit drei radial erhabenen als Umfangsrippen 18,19,20 ausgebildeten Profilbändern dargestellt.

In anderer nicht dargestellter Ausführung ist das mittlere 19 der drei Profilbänder 18,19,20 als Profilblockreihe bekannter Art ausgebildet. In anderer nicht dargestellter Ausführung sind die drei Profilbänder 18,19,20 des mittleren Abschnitts 13 als profilblockreihe bekannter Art ausgebildet.

In anderer nicht dargestellter Ausführung ist ein Nutzfahrzeugreifen mit einem mittelern Abschnitt 13 mit zwei bis sechs radial erhabenen, über den Umfang erstreckten Profilbändern ausgebildet. Diese sind in einer Ausführung als Umfangsrippen und in anderer Ausführung als Profilblockreihen bekannter Art ausgebildet.

In anderer nicht dargestellter Art sind die an die Umfangsrillen 21 bzw. 22 angrenzenden Profilbänder 16 bzw. 17 nicht - wie in Fig. 2 dargestellt und oben beschrieben - als Umfangsrippen, sondern in analoger Weise als Profilblockreihen bekannter Art ausgebildet.

### Bezugszeichenliste

### (Teil der Beschreibung)

- 1: Wulstbereich
- 2: Seitenwand
- 3: Kronenbereich
- 4: Wulstkern
- 5: Karkasse
- 6: Apex
- 7: Umschlag
- 8: Wulstverstärkerstreifen
- 9: Gürtel
- 10: Laufstreifen
- 11: Seitenwandgummistreifen
- 12: Innenschicht
- 13: Mittlerer Abschnitt
- 14: Schulterabschnitt
- 15: Schulterabschnitt
- 16: Umfangsrippe
- 17: Umfangsrippe
- 18: Umfangsrippe
- 19: Umfangsrippe
- 20: Umfangsrippe
- 21: Umfangsrille
- 22: Umfangsrille
- 23: Umfangsrille
- 24: Umfangsrille
- 25: Radial äußere Oberfläche
- 26: Radial äußere Oberfläche
- 27: Flanke
- 28: Flanke
- 29: Steg
- 30: Radial äußere Oberfläche
- 31: Stegflanke
- 32: Stegflanke
- 33: Umfangsrillenabschnitt
- 34: Umfangsrillenabschnitt
- 35: Rillengrund
- 36: Rillengrund
- 37: Geradliniger Abschnitt
- 38: Fase
- 39:

## Patentansprüche

1. Laufstreifenprofil eines Fahrzeugluftreifens für Nutzfahrzeuge mit einem in axialer Richtung A des Reifens mittleren Laufstreifenprofilabschnitt (13) und mit axial beiderseits des mittleren Laufstreifenprofilabschnittes (13) jeweils einem Schulterprofilabschnitt (14,15), wobei der mittlere Laufstreifenprofilabschnitt (13) aus mehreren axial nebeneinander angeordneten, durch jeweils eine Umfangsrille (23,24) voneinander getrennten und in Umfangsrichtung U ausgerichteten Profilbändern (18,19,20) - wie beispielsweise Umfangsrippen oder Profilblockreihen - ausgebildet ist, von denen das axial zu beiden Seiten hin jeweils äußere Profilband jeweils ein erstes Profilband (18,20) ist, wobei die Schulterprofilabschnitte (14,15) jeweils ein zweites Profilband (16,17) aufweisen, welches von dem nächstliegenden ersten Profilband (18,20) des mittleren Laufstreifenabschnitts (13) jeweils durch eine erste Umfangsrille (21,22) getrennt ist, wobei diese Profilbänder (16,17,18,20) nach radial außen jeweils durch eine radial äußere, die Bodenkontaktoberfläche bildende Oberfläche (26,25) und zur angrenzenden Umfangsrille (21,22) mit einer Flanke (27,28), welche die zum Profilband (16,17,18,20) gerichtete Rillenwand bildet, begrenzt sind, wobei wenigstens eine der beiden ersten Umfangsrillen (21,22) mit einem aus ihrem Rillengrund radial erhabenen Steg (29) ausgebildet ist, welcher sich über den gesamten Umfang des Fahrzeugluftreifens erstreckt und in radialer Erstreckungsrichtung radial innerhalb der durch die radial äußeren Oberflächen (26,25) der ersten und der zweiten Profilbänder (20,17) gebildeten Mantelfläche endet und welcher die erste Umfangsrille (22) in axialer Richtung A in einen ersten (33), an das erste Profilband (20) angrenzenden und in einen zweiten (34), an das zweite Profilband (17) angrenzenden Umfangsrillenabschnitt teilt, **und**
**wobei der erste Umfangsrillenabschnitt (33) schmaler ausgebildet ist als der zweite,**
**dadurch gekennzeichnet,**
**dass** in den die Reifenachse aufweisenden Querschnittebenen der den zweiten Umfangsrillenabschnitt (34) nach radial innen begrenzende Rillengrund (36) mit einem geradlinig verlaufenden axialen Erstreckungsabschnitt (37) der Länge a ausgebildet ist,
**dass** in den die Reifenachse aufweisenden Querschnittebenen die zum zweiten Umfangsrillenabschnitt (34) weisende Flanke (32) des Steges (29) sich im wesentlichen geradlinig nach außen erstreckt, wobei zwischen geradlinigem Erstreckungsabschnitt (37) des Rillengrundes (36) und Stegflanke (32) ein gekrümmter Übergangsabschnitt ausgebildet ist mit einem Krümmungsradius R₂, dass in den die Reifenachse aufweisenden Querschnittebenen die zum zweiten Umfangsrillenabschnitt (34) weisende Flanke (28) des zweiten Profilbandes (17) sich zumindest in ihrem radial äußeren Erstreckungsbereich im wesentlichen geradlinig nach radial außen erstreckt, wobei ausgehend vom geradlinigen Erstreckungsabschnitt (37) des Rillengrundes (36) zur Flanke (28) des zweiten Profilbandes (17) hin ein gekrümmter Übergang ausgebildet ist mit einem Krümmungsradius R₃ mit R₃ > R₂, und wobei der geradlinige Erstreckungsabschnitt (37) des Rillengrundes (36) in axialer Richtung A ausgehend vom Übergang zur Stegflanke (32) bis zum Übergang zur Flanke (28) des zweiten Profilbandes (17) unter Einschluss eines Neigungswinkels **α mit 3° ≤ α ≤ 20°** zur axialen Richtung A radial ansteigend ausgebildet ist.

2. Laufstreifenprofil gemäß den Merkmalen von Anspruch 1,
wobei in den die Reifenachse aufweisenden Querschnittebenen der Rillengrund (35) des ersten Umfangsrillenabschnittes (33) mit einem Krümmungsradius R₁ mit R₁ < R₃ gekrümmt ausgebildet ist, der auf der zum Steg (29) hinweisenden Seite tangential in die den ersten Umfangsrillenabschnitt (33) begrenzende Stegflanke (31) und auf der zum ersten Profilband (20) weisenden Seite tangential in die die erste Umfangsrille (22) begrenzende Flanke (27) des ersten Profilbandes (20) übergeht.

3. Laufstreifenprofil gemäß den Merkmalen von Anspruch 2,
wobei die Krümmungsradien R₁ und R₂ mit (0,5 R₁)≤ R₂ ≤ (1,5 R₁) ausgebildet sind.

4. Laufstreifenprofil gemäß den Merkmalen von einem oder mehreren der vorangegangenen Ansprüche,
wobei die erste Umfangsrille (22) in ihrem ersten Umfangsrillenabschnitt (33) mit einer Rillentiefe t₁ und in ihrem zweiten Umfangsrillenabschnitt (34) mit einer Rillentiefe t₂ ausgebildet ist mit (1,2 t₁) ≥ t₂ ≥ (0,8 t₁).

5. Laufstreifenprofil gemäß den Merkmalen von einem oder mehreren der vorangegangenen Ansprüche,
wobei die erste Umfangsrille (22) in ihrem zweiten Umfangsrillenabschnitt (34) mit einer Rillentiefe t₂ und im Erstreckungsbereich der den Steg nach radial außen begrenzenden Oberfläche mit einer Rillentiefe t₃ ausgebildet ist mit (0,5 t₂)≥t₃≥(0,1 t₂).

6. Laufstreifenprofil gemäß den Merkmalen von einem oder mehreren der vorangegangenen Ansprüche,
wobei der axiale Abstand zwischen dem Schnitt S₄ der Flanke (28) des zweiten Profilbandes (17) mit der radial äußeren Oberfläche (25) des zweiten Profilbandes (17) zum Schnitt S₃ der den zweiten Umfangsrillenabschnitt (34) begrenzenden Stegflanke (32) mit der den Steg (29) nach radial außen begrenzenden Oberfläche (30) die Breite b₂ des zweiten Umfangsrillenabschnitts (34) bildet,
wobei der axiale Abstand zwischen dem Schnitt S₁ der Flanke (27) des ersten Profilbandes (20) mit der radial äußeren Oberfläche (26) des ersten Profilbandes (20) zum Schnitt S₂ der den ersten Umfangsrillenabschnitt (33) begrenzenden Stegflanke (31) mit der den Steg (29) nach radial außen begrenzenden Oberfläche (30) die Breite b₁ des ersten Umfangsrillenabschnitts (33) bildet und
wobei die Breiten b₂ und b₁ mit (2 b₁) ≤ b₂≤(4 b₁) ausgebildet sind.

7. Laufstreifenprofil gemäß den Merkmalen von einem oder mehreren der vorangegangenen Ansprüche,
wobei der axiale Abstand zwischen dem Schnitt S₄ der Flanke (28) des zweiten Profilbandes (17) mit der radial äußeren Oberfläche (25) des zweiten Profilbandes (17) zum Schnitt S₁ der Flanke (27) des ersten Profilbandes (20) mit der radial äußeren Oberfläche (26) des ersten Profilbandes (20) die Breite B der ersten Umfangrille (22) bildet,
wobei der axiale Abstand zwischen dem Schnitt S₃ der den zweiten Umfangsrillenabschnitt (34) begrenzenden Stegflanke (32) mit der den Steg (29) nach radial außen begrenzenden Oberfläche (30) zum Schnitt S₂ der den ersten Umfangsrillenabschnitt (33) begrenzenden Stegflanke (31) mit der den Steg (29) nach radial außen begrenzenden Oberfläche (30) die Breite b₃ des Steges (29) bildet mit (0,3B) ≤ b₃≤(0,6B).

8. Laufstreifenprofil gemäß den Merkmalen von einem oder mehreren der vorangegangenen Ansprüche,
wobei im Steg (29) im Übergang zwischen der den Steg (29) nach radial außen begrenzenden Oberfläche (30) und der zum zweiten Umfangsrillenabschnitt (34) weisenden Stegflanke (32) eine Fase (38) ausgebildet ist.

9. Laufstreifenprofil gemäß den Merkmalen von einem oder mehreren der vorangegangenen Ansprüche,
wobei das erste Profilband (18,20) und das zweite Profilband (16,17) jeweils eine Umfangsrippe ist.

## Claims

1. Tread pattern of a vehicle pneumatic tire for utility vehicles having a tread pattern portion (13) which is in the center in the axial direction A of the tire, and having a shoulder tread portion (14, 15) axially on either side of the central tread pattern portion (13), wherein the central tread pattern portion (13) is formed from multiple tread bands (18, 19, 20) arranged axially side by side, each separated from one another by a circumferential groove (23, 24) and aligned in a circumferential direction U - such as circumferential ribs or series of tread lugs, for example - of which the axially outer tread band facing each of the two sides is in each case a first tread band (18, 20), wherein the shoulder tread portions (14, 15) each comprise a second tread band (16, 17), which in each case is separated from the next first tread band (18, 20) of the central tread portion (13) by a first circumferential groove (21, 22), wherein these tread bands (16, 17, 18, 20) are each defined radially outwards by a radially outer surface (26, 25) forming the ground contact surface and are defined in relation to the adjacent circumferential groove (21, 22) with a flank (27, 28), which forms the groove wall facing the tread band (16, 17, 18, 20), wherein at least one of the two first circumferential grooves (21, 22) is formed with a bar (29), which is radially raised from the groove base and which extends over the entire circumference of the vehicle pneumatic tire, and which in a radial direction of its extent terminates radially inside the shell surface formed by the radially outer surfaces (26, 25) of the first and second tread bands (20, 17), and which in an axial direction A divides the first circumferential groove (22) into a first circumferential groove portion (33) adjacent to the first tread band (20) and a second circumferential groove portion (34) adjacent to the second tread band (17), and
wherein the first circumferential groove portion (33) is of narrower design than the second,
**characterized in that**
in the cross sectional planes comprising the tire axis the groove base (36) defining the second circumferential groove portion (34) radially inwards is formed with an axially extending portion (37) of length a running in a straight line, that in the cross sectional planes comprising the tire axis the flank (32) of the bar (29) facing the second circumferential groove portion (34) extends substantially in a straight line outwards, wherein a curved transitional portion having a radius of curvature R₂ is formed between the portion (37) of the groove base (36) extending in a straight line and the bar flank (32), that in the cross sectional planes comprising the tire axis the flank (28) of the second tread band (17) facing the second circumferential groove portion (34) extends substantially in a straight line radially outwards, at least in its radially outer area of extent, wherein a curved transition having a radius of curvature R₃ with R₃ > R₂, is formed starting from the portion (37) of the groove base (36) extending in a straight line to the flank (28) of the second tread band (17), and wherein the portion (37) of the groove base (36) extending in a straight line in an axial direction A is formed rising radially from the transition to the bar flank (32) to the transition to the flank (28) of the second tread band (17), enclosing an angle of inclination α, with 3° ≤ a ≤ 20°, with respect to the axial direction A.

2. Tread pattern according to the features of Claim 1, wherein in the cross sectional planes comprising the tire axis the groove base (35) of the first circumferential groove portion (33) is formed curved with a radius of curvature R₁ with R₁ < R₃, which on the side facing the bar (29) merges tangentially into the bar flank (31) defining the first circumferential groove portion (33) and on the side facing the first tread band (20) merges tangentially into the flank (27) of the first tread band (20) defining the first circumferential groove (22).

3. Tread pattern according to the features of Claim 2, wherein the radii of curvature R₁ and R₂ are formed with (0.5 R₁)≤R₂≤(1.5R₁).

4. Tread pattern according to the features of one or more of the preceding claims, wherein the first circumferential groove (22) in its first circumferential groove portion (33) is formed with a groove depth t₁ and in its second circumferential groove portion (34) with a groove depth t₂, with (1.2t₁)≥t₂≥(0.8t₁).

5. Tread pattern according to the features of one or more of the preceding claims, wherein the first circumferential groove (22) in its second circumferential groove portion (34) is formed with a groove depth t₂ and in the area of extent of the surface defining the bar radially outwards is formed with a groove depth t₃ with (0.5t₂)≥t₃≥(0.1t₂).

6. Tread pattern according to the features of one or more of the preceding claims, wherein the axial distance between the section S₄ of the flank (28) of the second tread band (17), with the radially outer surface (25) of the second tread band (17), to the section S₃ of the bar flank (32) defining the second circumferential groove portion (34), with the surface (30) defining the bar (29) radially outwards, forms the width b₂ of the second circumferential groove portion (34), wherein the axial distance between the section S₁ of the flank (27) of the first tread band (20), with the radially outer surface (26) of the first tread band (20), to the section S₂ of the bar flank (31) defining the first circumferential groove portion (33), with the surface (30) defining the bar (29) radially outwards, forms the width b₁ of the first circumferential groove portion (33), and wherein the widths b₂ and b₁ are formed with (2b₁)≤b₂≤(4b₁).

7. Tread pattern according to the features of one or more of the preceding claims, wherein the axial distance between the section S₄ of the flank (28) of the second tread band (17), with the radially outer surface (25) of the second tread band (17), to the section S₁ of the flank (27) of the first tread band (20), with the radially outer surface (26) of the first tread band (20), forms the width B of the first circumferential groove (22), wherein the axial distance between the section S₃ of the bar flank (32) defining the second circumferential groove portion (34), with the surface (30) defining the bar (29) radially outwards, to the section S₂ of the bar flank (31) defining the first circumferential groove portion (33), with the surface (30) defining the bar (29) radially outwards, forms the width b₃ of the bar (29) with (0.3B)≤b₃≤(0.6B).

8. Tread pattern according to the features of one or more of the preceding claims, wherein a chamfer (38) is formed in the bar (29) in the transition between the surface (30) defining the bar (29) radially outwards and the bar flank (32) facing the second circumferential groove portion (34).

9. Tread pattern according to the features of one or more of the preceding claims, wherein the first tread band (18, 20) and the second tread band (16, 17) is in each case a circumferential rib.

## Revendications

1. Sculpture de bande de roulement d'un pneu de véhicule pour véhicules utilitaires avec une partie centrale (13) de sculpture de bande de roulement en direction axiale A et avec chaque fois une partie de sculpture d'épaulement (14, 15) axialement de part et d'autre de la partie centrale (13) de la sculpture de bande de roulement, dans laquelle la partie centrale de sculpture de bande de roulement (13) est formée de plusieurs bandes de sculpture (18, 19, 20) - comme par exemple des nervures périphériques ou des rangées de blocs de sculpture - juxtaposées axialement, séparées l'une de l'autre chaque fois par une rainure périphérique (23, 24) et orientées dans la direction périphérique U, parmi lesquelles la bande de sculpture respectivement extérieure axialement vers les deux côtés est chaque fois une première bande de sculpture (18, 20), dans laquelle les parties de sculpture d'épaulement (14, 15) présentent respectivement une deuxième bande de sculpture (16, 17), qui est séparée de la première bande de sculpture la plus proche (18, 20) de la partie centrale de sculpture de bande de roulement (13) chaque fois par une première rainure périphérique (21, 22), dans laquelle ces bandes de sculpture (16, 17, 18, 20) sont limitées radialement vers l'extérieur respectivement par une surface radialement extérieure (26, 25) formant la surface de contact avec le sol et vers la rainure périphérique adjacente (21, 22) avec un flanc (27, 28), qui forme la paroi de rainure orientée vers la bande de sculpture (16, 17, 18, 20), dans laquelle au moins une des deux premières rainures périphériques (21, 22) est formée avec une nervure (29) radialement surélevée à partir de son fond de rainure, qui s'étend sur toute la périphérie du pneu de véhicule et qui se termine dans la direction d'extension radiale radialement à l'intérieur de la surface latérale formée par les surfaces radialement extérieures (26, 25) des premières et deuxièmes bandes de sculpture (20, 17) et qui divise la première rainure périphérique (22) en direction axiale A en une première (33), adjacente à la première bande de sculpture (20), et une deuxième (34), adjacente à la deuxième bande de sculpture (17), parties de rainure périphérique, et dans laquelle la première partie de rainure périphérique (33) est plus étroite que la deuxième,
**caractérisée en ce que**
le fond de rainure (36) limitant radialement vers l'intérieur la deuxième partie de rainure périphérique (34) est formé dans le plan de section transversale présentant l'axe du pneu avec une partie d'extension axiale s'étendant en ligne droite (37) de longueur a,
le flanc (32) de la nervure (29) orienté vers la deuxième partie de rainure périphérique (34) s'étend dans les plans de section transversale présentant l'axe du pneu essentiellement en ligne droite vers l'extérieur, dans laquelle une partie de transition courbe est formée entre la partie d'extension rectiligne (37) du fond de rainure (36) et le flanc de nervure (32) avec un rayon de courbure R₂,
le flanc (28) de la deuxième bande de sculpture (17) orienté vers la deuxième partie de rainure périphérique (34) s'étend dans les plans de section transversale présentant l'axe du pneu, au moins dans sa région d'extension radialement extérieure, essentiellement en ligne droite radialement vers l'extérieur, dans laquelle, en partant de la partie d'extension rectiligne (37) du fond de rainure (36) vers le flanc (28) de la deuxième bande de sculpture (17), une transition courbe est formée avec un rayon de courbure R₃ avec R₃ > R₂, et dans laquelle la partie d'extension rectiligne (37) du fond de rainure (36) est réalisée sous forme radialement montante en partant en direction axiale A de la transition vers le flanc de nervure (32) jusqu'à la transition vers le flanc (28) de la sculpture (17) en formant un angle d'inclinaison α, avec 3° ≤ α ≤ 20°, par rapport à la direction axiale A.

2. Sculpture de bande de roulement selon les
caractéristiques de la revendication 1, dans laquelle le fond de rainure (35) de la première partie de rainure périphérique (33) est de forme courbe dans les plans de section transversale présentant l'axe du pneu avec un rayon de courbure R₁ avec R₁ < R₃, qui sur le côté orienté vers la nervure (29) se prolonge tangentiellement dans le flanc de nervure (31) limitant la première partie de rainure périphérique (33) et sur le côté orienté vers la première bande de sculpture (20) se prolonge tangentiellement dans le flanc (27) de la première bande de sculpture (20) limitant la première rainure périphérique (22).

3. Sculpture de bande de roulement selon les
caractéristiques de la revendication 2, dans laquelle les rayons de courbure R₁ et R₂ sont formés avec la relation (0,5 R₁) ≤ R₂ ≤ (1,5 R₁).

4. Sculpture de bande de roulement selon les
caractéristiques d'une ou de plusieurs des revendications précédentes, dans laquelle la première rainure périphérique (22) est formée dans sa première partie de rainure périphérique (33) avec une profondeur de rainure t₁ et dans sa deuxième partie de rainure périphérique (34) avec une profondeur de rainure t₂, avec (1,2 t₁) ≥ t₂ ≥ (0,8 t₁).

5. Sculpture de bande de roulement selon les
caractéristiques d'une ou de plusieurs des revendications précédentes, dans laquelle la première rainure périphérique (22) est formée dans sa deuxième partie de rainure périphérique (34) avec une profondeur de rainure t₂ et dans la région d'extension de la surface limitant la nervure radialement vers l'extérieur avec une profondeur de rainure t₃, avec (0,5 t₂) ≥ t₃ ≥ (0,1 t₂).

6. Sculpture de bande de roulement selon les
caractéristiques d'une ou de plusieurs des revendications précédentes,
dans laquelle la distance axiale entre la coupe S₄ du flanc (28) de la deuxième bande de sculpture (17) avec la surface radialement extérieure (25) de la deuxième bande de sculpture (17) jusqu'à la coupe S₃ du flanc de nervure (32) limitant la deuxième partie de rainure périphérique (34) avec la surface (30) limitant radialement vers l'extérieur la nervure (29) forme la largeur b₂ de la deuxième partie de rainure périphérique (34),
dans laquelle la distance axiale entre la coupe S₁ du flanc (27) de la première bande de sculpture (20) avec la surface radialement extérieure (26) de la première bande de sculpture (20) jusqu'à la coupe S₂ du flanc de nervure (31) limitant la première partie de rainure périphérique (33) avec la surface (30) limitant la nervure (29) forme la largeur b₁ de la première partie de rainure périphérique (33) et
dans laquelle les largeurs b₂ et b₁ sont formées avec (2 b₁) ≤ b₂ ≤ (4 b₁).

7. Sculpture de bande de roulement selon les
caractéristiques d'une ou de plusieurs des revendications précédentes,
dans laquelle la distance axiale entre la coupe S₄ du flanc (28) de la deuxième bande de sculpture (17) avec la surface radialement extérieure (25) de la deuxième bande de sculpture (17) jusqu'à la coupe S₁ du flanc (27) de la première bande de sculpture (20) avec la surface radialement extérieure (26) de la première bande de sculpture (20) forme la largeur B de la première rainure périphérique (22),
dans laquelle la distance axiale entre la coupe S₃ du flanc de nervure (32) limitant la deuxième partie de rainure périphérique (34) avec la surface radialement extérieure (30) limitant la nervure (29) jusqu'à la coupe S₂ du flanc de nervure (31) limitant la première partie de rainure périphérique (33) avec la surface radialement extérieure (30) limitant la nervure (29) forme la largeur b₃ de la nervure (29), avec la relation (0,3 B) ≤ b₃ ≤ (0,6 B).

8. Sculpture de bande de roulement selon les
caractéristiques d'une ou de plusieurs des revendications précédentes, dans laquelle un chanfrein (38) est formé dans la nervure (29) dans la transition entre la surface (30) limitant la nervure (29) radialement vers l'extérieur et le flanc de nervure (32) orienté vers la deuxième partie de rainure périphérique (34).

9. Sculpture de bande de roulement selon les
caractéristiques d'une ou de plusieurs des revendications précédentes, dans laquelle la première bande de sculpture (18, 20) et la deuxième bande de sculpture (16, 17) est respectivement une nervure périphérique.
